(19) Europäisches Patentamt
European Patent Office
Office européen des brevets

(11) EP 3 194 500 B1

(12) **EUROPEAN PATENT SPECIFICATION**

(45) Date of publication and mention of the grant of the patent:
**07.10.2020 Bulletin 2020/41**

(21) Application number: **15756481.6**

(22) Date of filing: **04.08.2015**

(51) Int Cl.:
***C08L 69/00*** *(2006.01)* ***C08L 51/04*** *(2006.01)*
***C08L 55/02*** *(2006.01)* ***C08K 5/49*** *(2006.01)*
***C08K 3/04*** *(2006.01)* ***C08K 3/34*** *(2006.01)*
***C08K 5/523*** *(2006.01)* ***C08L 25/12*** *(2006.01)*

(86) International application number:
**PCT/IB2015/055917**

(87) International publication number:
**WO 2016/042426 (24.03.2016 Gazette 2016/12)**

(54) **FLAME RETARDANT BLENDED POLYCARBONATE COMPOSITIONS WITH IMPROVED SURFACE APPEARANCE**

FLAMMHEMMENDE GEMISCHTE POLYCARBONATZUSAMMENSETZUNGEN MIT VERBESSERTER OBERFLÄCHENERSCHEINUNG

COMPOSITIONS DE POLYCARBONATE MÉLANGÉES AVEC UN AGENT IGNIFUGEANT PRÉSENTANT UN ASPECT DE SURFACE AMÉLIORÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2014 US 201462052874 P**

(43) Date of publication of application:
**26.07.2017 Bulletin 2017/30**

(73) Proprietor: **SABIC Global Technologies B.V.**
**4612 PX Bergen op Zoom (NL)**

(72) Inventors:
- **IIDA, Hiroshi**
**Utsunomiya,**
**Tochigi 320-0851 (JP)**
- **MORIOKA, Masataka**
**Tochigi-ken 321-4337 (JP)**
- **SATO, Sho**
**Tochigi 321-0155 (JP)**

(74) Representative: **Elzaburu S.L.P.**
**Miguel Angel 21, 2nd floor**
**28010 Madrid (ES)**

(56) References cited:
**WO-A1-00/24828**
**WO-A1-2006/087940**
**WO-A1-2009/104120**
**US-A1- 2005 009 969**
**US-A1- 2009 203 831**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF DISCLOSURE

The present disclosure relates to blended thermoplastic compositions and in one aspect to blended thermoplastic compositions with improved surface appearance. The present disclosure also relates to methods of manufacturing these compositions and articles that include these compositions.

### BACKGROUND OF THE DISCLOSURE

Thermoplastic materials are employed in a vast array of products in a variety of fields. Thus for any practical utility, thermoplastic materials must exhibit a balance of properties. The development of improved blended thermoplastic compositions, *e.g.,* reinforced polycarbonate compositions, with robust flame-retardant properties presents significant technical challenges in discovering compositions that maintain an appropriate balance in physical properties. For example, the composition modulus can be improved with the addition of inorganic fillers, but the impact toughness will significantly drop compared to unfilled compositions. The use of blended thermoplastic compositions in the application of electrical and electronic fields, especially the consumer electronics industry, increasingly requires compositions able to the meet varied requirements pertaining to modulus, flow, flame retardance, heat resistance, impact strength and appearance.

Existing products using standard polycarbonates often do not have sufficient ductile/brittle transition temperatures and impact properties. Furthermore, conventional polycarbonate blend compositions may not possess the appropriate balance of mechanical properties and melt flow properties, as well as certain aesthetic qualities that can deliver a deep black color, vivid dark colors or bright white colors to a molded article. For example, thermoplastics often used in molded articles, such as extrusion molded articles, have parallel line defects, alternatively referred to as "streaks," which appear as parallel lines coincident with the direction of extrusion. WO 00/24828 A1 discloses thermoplastic polycarbonate based compositions similar to the one so f the invention. These compositions do however not disclose a composition comprising more than one type of polycarbonates; specifically a combination of a polycarbonate with average molecular weight of over 45.000 and a polycarbonate with average molecular weight below 45.000.

These and other shortcomings of the prior art are addressed by the present disclosure.

### BRIEF DESCRIPTION OF THE FIGURES

The accompanying drawing, which is incorporated in and constitute a part of this specification, illustrate a method of evaluating physical properties of the instant invention.

FIG. 1 illustrates a streak evaluation tool used to determine the amount of streaks apparent on a molded sample prepared according to the present disclosure.

### SUMMARY

In one aspect, the disclosure relates to a thermoplastic composition comprising: a) a polycarbonate component from about 50 wt% to about 70 wt%, wherein the polycarbonate component comprises a polycarbonate mixture of at least a first polycarbonate having a weight average molecular weight equal to or greater than 45000 by polystyrene standard and a second polycarbonate having a weight average molecular weight less than 45000 by polystyrene standard, wherein weight average molecular weight is measured according to the relevant method detailed in the description, wherein the loading of the first polycarbonate is greater than at least 50% of the total weight of the polycarbonate mixture; b) a high-rubber grafted acrylonitrile-butadiene-styrene copolymer component or a methyl (meth) acrylate-butadiene-styrene component in an amount from about 5 wt% to about 20 wt%; c) a styrene-acrylonitrile (SAN) copolymer in an amount from about 5 wt% to about 20 wt%; d) a flame retardant component in an amount from about 5 wt% to about 20 wt%; e) a mineral filler in an amount from about 0.5 wt% to about 5 wt%; wherein all weight percent values are based on the total weight of the composition; further comprising a colorant in an amount from about 0.001 wt% to about 10 wt% of the total weight a - e.

Additional aspects of the disclosure will be set forth in part in the description which follows, and in part will be obvious from the description, or can be learned by practice of the disclosure. The advantages of the disclosure will be realized and attained by means of the elements and combinations particularly pointed out in the appended claims. It is to be understood that both the foregoing general description and the following detailed description are exemplary and explanatory only and are not restrictive of the disclosure, as claimed.

## DETAILED DESCRIPTION

The present disclosure can be understood more readily by reference to the following detailed description of the disclosure and the Examples included therein. In various aspects, the present disclosure pertains to blended thermoplastic compositions comprising one or more of a polycarbonate component, a polycarbonate-polysiloxane copolymer, a high rubber graft acrylonitrile-butadiene-styrene copolymer, a styrene acrylonitrile polymer, a flame retardant, and a colorant. In an aspect, the blended thermoplastic composition exhibits improved mechanical and aesthetic properties.

## DEFINITIONS

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate" includes mixtures of two or more polycarbonate polymers.

As used herein, the term "combination" is inclusive of blends, mixtures, alloys, reaction products, and the like.

Ranges can be expressed herein as from one particular value, and/or to another particular value. When such a range is expressed, another aspect includes from the one particular value and/or to the other particular value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the value designated some other value approximately or about the same. It is generally understood, as used herein, that it is the nominal value indicated $\pm$10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where Mi is the molecular weight of a chain and Ni is the number of chains of that molecular weight. Mn can be determined for polymers, e.g., polycarbonate polymers, by methods well known to a person having ordinary skill in the art using molecular weight standards, e.g. polycarbonate standards or polystyrene standards, preferably certified or traceable molecular weight standards.

As used herein, the terms "weight average molecular weight" or "Mw" can be used interchangeably, and are

defined by the formula:

$$M_w = \frac{\sum N_i M_i^2}{\sum N_i M_i},$$

where Mi is the molecular weight of a chain and Ni is the number of chains of that molecular weight. Compared to Mn, Mw takes into account the molecular weight of a given chain in determining contributions to the molecular weight average. Thus, the greater the molecular weight of a given chain, the more the chain contributes to the Mw. Mw can be determined for polymers, e.g. polycarbonate polymers, by methods well known to a person having ordinary skill in the art using molecular weight standards, e.g. polycarbonate standards or polystyrene standards, preferably certified or traceable molecular weight standards.

As used herein, the terms "polydispersity index" or "PDI" can be used interchangeably, and are defined by the formula:

$$PDI = \frac{M_w}{M_n}.$$

The PDI has a value equal to or greater than 1, but as the polymer chains approach uniform chain length, the PDI approaches unity.

The terms "BisA," "BPA," or "bisphenol A," which can be used interchangeably, as used herein refers to a compound having a structure represented by the formula:

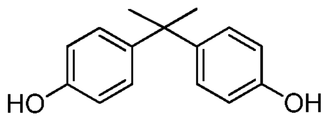

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

The terms "residues" and "structural units", used in reference to the constituents of the polymers, are synonymous throughout the specification.

As used herein the terms "weight percent," "wt%," and "wt. %," which can be used interchangeably, indicate the percent by weight of a given component based on the total weight of the composition, unless otherwise specified. That is, unless otherwise specified, all wt% values are based on the total weight of the composition. It should be understood that the sum of wt% values for all components in a disclosed composition or formulation are equal to 100.

Certain abbreviations are defined as follows: "g" is grams, "kg" is kilograms, "°C" is degrees Celsius, "min" is minutes, "mm" is millimeter, "mPa" is megapascal, "WiFi" is a system of accessing the internet from remote machines, "GPS" is Global Positioning System-- a global system of U.S. navigational satellites which provide positional and velocity data. "LED" is light-emitting diode, "RF" is radio frequency, and "RFID" is radio frequency identification.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

**1. BLENDED THERMOPLASTIC POLYMER COMPOSITIONS**

As briefly described above, the present disclosure relates to blended thermoplastic compositions, which can comprise one or more of a polycarbonate component, a polysiloxane copolymer component, a high rubber graft acrylonitrile-butadiene-styrene (HRG-ABS) copolymer and/or methyl methacrylate-butadiene-styrene (MBS) resins component, a styrene-acrylonitrile copolymer component, a flame retardant, a mineral filler, and a colorant. The resulting compositions can be used in the manufacture of articles requiring materials with good flow, thin wall flame retardancy, good thermal resistance and improved surface appearance.

In certain aspects, blended thermoplastic compositions can comprise a high rubber graft (HRG) type of acrylonitrile-butadiene-styrene (ABS) and/or methyl methacrylate-butadiene-styrene (MBS) and molded parts made thereof have improved mechanical and aesthetic properties as compared to a substantially similar compositions having like components, but with bulk ABS instead of HRG-ABS. For example, higher loading of HRG-ABS or MBS can yield a higher Charpy impact strength. Furthermore, the addition of a mineral filler, such as a silicate mineral filler can deliver blended thermoplastic compositions having improved impact resistance (e.g., higher impact resistance than comparable non-mineralized blended thermoplastic compositions having bulk ABS). Loading of mineral filler in the blended composition in such aspects can range from about 0.5 wt% to about 5 wt%.

Without intent to be bound by theory, modeling, and/or experiment, it is believed that the improved impact resistance (e.g., plating rate) arises from the incorporation of a high rubber graft ABS copolymer or MBS. In a further aspect, the introduction of a mineral filler contributes to the increased impact strength. The addition of a colorant can further improve impact strength while customizing surface appearance.

As an example, a molded sample comprising the blended thermoplastic composition can have a Charpy impact strength of at least about 7 $KJ/m^2$ when tested in accordance with ISO 179. As another example, a molded sample comprising the blended thermoplastic composition can have a heat deflection temperature of at least about 76 °C when tested in accordance with ISO 75, 18.6 kg test standard. As another example, a molded sample comprising the blended thermoplastic composition can have a spiral flow length of at least about 500 mm at a 2 mm thickness, with mold temperature at 65 °C, resin temperature at 260 °C, injection pressure with 120 MPa, and injection speed 60 mm/s, using molding machine FANUC S-200i-150B. As a further example, a molded sample of the thermoplastic composition can exhibit no surface streaking when tested under a streak test described herein.

In various aspects, molded samples may comprise the disclosed blended thermoplastic compositions. In a further aspect, a molded sample comprising the blended thermoplastic composition can have a Charpy impact strength of at least about 7 $KJ/m^2$ to about 100 $KJ/m^2$ when tested in accordance with ISO 179. In an example, the molded sample comprising the blended thermoplastic composition has a Charpy impact strength from about 7 $KJ/m^2$ to about 80 $KJ/m^2$ when tested in accordance with ISO 179. In yet a further example, the molded sample comprising the blended thermoplastic composition has a Charpy impact strength of from about 7 $KJ/m^2$ to about 60 $KJ/m^2$ when tested in accordance with ISO 179.

In some embodiments, the molded sample comprising the blended thermoplastic composition has a Charpy impact strength greater than or equal to about 7 $KJ/m^2$ when tested in accordance with ISO 179. In another embodiment, the molded sample comprising the blended thermoplastic composition can have Charpy impact strength greater than or equal to about 7 $KJ/m^2$ when tested in accordance with ISO 179.

In another aspect, the disclosed blended thermoplastic composition can exhibit an improved heat deflection temperature. In an example, the blended thermoplastic composition can have a heat deflection temperature of at least about 76 °C when tested in accordance with ISO 75.

In a further aspect, a sufficient amount of the high rubber graft acrylonitrile butadiene styrene is added to maintain the flame performance while improving and/or maintaining physical properties of the composition, such as impact strength and/or heat deflection temperature (HDT). For example, according to aspects of the disclosure, a molded sample comprising the blended thermoplastic composition has a 5VB rating at a thickness of at least 1.5 mm (e.g., about 1.8mm) when tested in accordance with UL94.

In an aspect, the disclosed blended thermoplastic composition exhibits improved spiral flow length with respect to comparable thermoplastics. For example, the blended thermoplastic composition can have a spiral flow length of at least about 500 mm. In another example, the blended thermoplastic composition has a spiral flow length of at least about 550 mm.

In various further aspects, the disclosed blended thermoplastic compositions can optionally further comprise at least one additive. For example, the disclosed blended thermoplastic compositions can optionally further comprise at least one additive selected from an anti-drip agent, antioxidant, antistatic agent, chain extender, colorant, de-molding agent, dye, flow promoter, filler, flow modifier, light stabilizer, lubricant, mold release agent, pigment, quenching agent, thermal stabilizer, UV absorbent substance, UV reflectant substance, and UV stabilizer, or combinations thereof.

In further aspects, the disclosure also relates to methods for making the disclosed thermoplastic compositions. In still further aspects, the disclosure relates to articles and products comprising the disclosed thermoplastic compositions.

## 2. POLYCARBONATE POLYMER

The terms "polycarbonate" or "polycarbonates" as used herein includes copolycarbonates, homopolycarbonates and (co)polyester carbonates. The term polycarbonate can be further defined as compositions have repeating

structural units of the formula (1):

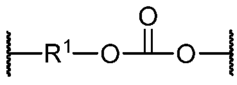(1),

in which at least 60 percent of the total number of $R^1$ groups are aromatic organic radicals and the balance thereof are aliphatic, alicyclic, or aromatic radicals. In a further aspect, each $R^1$ is an aromatic organic radical and, more preferably, a radical of the formula (2):

$$-A^1-Y^1-A^2- \qquad (2),$$

wherein each of $A^1$ and $A^2$ is a monocyclic divalent aryl radical and $Y^1$ is a bridging radical having one or two atoms that separate $A^1$ from $A^2$. In various aspects, one atom separates $A^1$ from $A^2$. For example, radicals of this type include, but are not limited to, radicals such as -O-, -S-, -S(O)-, $-S(O_2)-$, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging radical $Y^1$ is preferably a hydrocarbon group or a saturated hydrocarbon group such as methylene, cyclohexylidene, or isopropylidene. Polycarbonate materials include materials disclosed and described in U.S. Patent No. 7,786,246. Polycarbonate polymers can be manufactured by means known to those skilled in the art.

In some embodiments, the blended thermoplastic polymer comprises a mixture of polycarbonate polymers. For example, the polycarbonate component can comprise a mixture of at least first polycarbonate and a second polycarbonate, wherein the weight of either the first polycarbonate or the second polycarbonate is greater than at least 50% of the total weight of the polycarbonate mixture.

## 3. POLYSILOXANE COPOLYMER

Compositions can also contain a polycarbonate-polysiloxane copolymer. In some embodiments, the polycarbonate-polysiloxane copolymer is present in an amount of 5 wt% to about 10 wt% of the blended thermoplastic composition.

As used herein, the term "polycarbonate-polysiloxane copolymer" is equivalent to polysiloxane-polycarbonate copolymer, polycarbonate-polysiloxane polymer, or polysiloxane-polycarbonate polymer. In various aspects, the polycarbonate-polysiloxane copolymer can be a block copolymer comprising one or more polycarbonate blocks and one or more polysiloxane blocks. In certain embodiments, the polycarbonate block can be as described above. The polysiloxane-polycarbonate copolymer comprises polydiorganosiloxane blocks comprising structural units of the general formula (3) below:

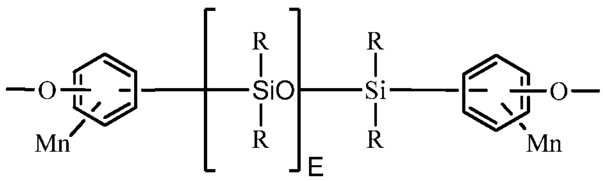

(3)

wherein the polydiorganosiloxane block length (E) is from about 20 to about 60; wherein each R group can be the same or different, and is selected from a $C_{1-13}$ monovalent organic group; wherein each M can be the same or different, and is selected from a halogen, cyano, nitro, $C_1$-$C_8$ alkylthio, $C_1$-$C_8$ alkyl, $C_1$-$C_8$ alkoxy, $C_2$-$C_8$ alkenyl, $C_2$-$C_8$ alkenyloxy group, $C_3$-$C_8$ cycloalkyl, $C_3$-$C_8$ cycloalkoxy, $C_6$-$C_{10}$ aryl, $C_6$-$C_{10}$ aryloxy, $C_7$-$C_{12}$ aralkyl, $C_7$-$C_{12}$aralkoxy, $C_7$- $C_{12}$ alkylaryl, or $C_7$-$C_{12}$ alkylaryloxy, and where each n is independently 0, 1, 2, 3, or 4. The polysiloxane-polycarbonate copolymer also comprises polycarbonate blocks comprising structural units of the general formula (4) below:

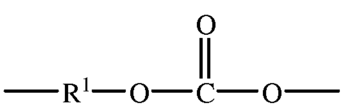(4)

wherein at least 60 percent of the total number of $R^1$ groups comprise aromatic moieties and the balance thereof comprise aliphatic, alicyclic, or aromatic moieties. Polysiloxane-polycarbonates materials include materials disclosed and described in U.S. Patent No. 7,786,246.

## 4. GRAFT COPOLYMER

In various aspects, the blended thermoplastic compositions comprise a high rubber graft acrylonitrile-butadiene-styrene ("HRG-ABS") polymer and/or methyl methacrylate-butadiene-styrene (MBS) resins. Certain compositions may comprise from about 5 wt% to about 20 wt% of a high-rubber grafted acrylonitrile-butadiene-styrene copolymer component or a methyl (meth) acrylate-butadiene-styrene component based on the total weight of the composition. Certain compositions may comprise from about 5 wt% to about 15 wt% of a high-rubber grafted acrylonitrile-butadiene-styrene copolymer component or a methyl (meth) acrylate-butadiene-styrene component based on the total weight of the composition. Other concentrations may be used as described herein and shown in the examples.

The MBS may have an average rubber particle size of about 0.24 microns (e.g., Paraloid EXL 2691). HRG-ABS polymers comprise greater than or equal to about 90% by weight SAN grafted onto polybutadiene, the remainder being free SAN. In some instances the free, ungrafted, SAN can be from 0 to 5 wt % of the HRG-ABS composition. Acrylonitrile-butadiene-styrene (ABS) can have butadiene contents between 12% and 85% by weight and styrene to acrylonitrile ratios between 90:10 and 60:40.

In a further aspect, at least about 30% by weight of the rigid polymeric phase is chemically bound or grafted to the rubbery polymeric phase. In an example, at least about 45% by weight of the rigid polymeric phase can be chemically bound or grafted to the rubbery polymeric phase. In a further example, at least about 60 % by weight of the rigid polymeric phase is bound.

In a further aspect, the HRG-ABS has rubber content greater than or equal to about 50 wt % by weight of the graft polymer. The HRG-ABS can have a rubber content greater than or equal to about 60 wt % by weight of the graft polymer. In another example, the HRG-ABS can have a rubber content less than or equal to about 95 wt % by weight of the graft polymer.

In various aspects, the high rubber graft impact modifier is in the form of a core-shell polymer built up from a rubber-like core on which one or more shells have been grafted. The core therefore consists substantially of an acrylate rubber or a butadiene rubber, and the shell(s) preferably comprise a vinylaromatic compound and/or a vinylcyanide and/or an alkyl(meth)acrylate. The core and/or the shell(s) often comprise multi-functional compounds that may act as a cross-linking agent and/or as a grafting agent. These polymers are usually prepared in several stages.

In a further aspect, the HRG-ABS comprises about 8 wt% acrylonitrile, about 43 wt% butadiene, and about 49 wt% styrene. For example, the HRG-ABS can comprise about 7 wt% acrylonitrile, about 50 wt% butadiene and about 43 wt% styrene. In another example, the HRG-ABS can comprise 11.1 wt. % acrylonitrile and about 38.5 wt. % styrene grafted to about 51 wt. % polybutadiene with a crosslink density of 43-55%.

In a further aspect, the HRG-ABS has a mean rubber particle size of about 0 microns to about 3 microns. As an example, the HRG-ABS can have a mean rubber particle size of about 0.4 microns. In another example, the HRG-ABS can have a mean rubber particle size of about 0.5 microns.

In various aspects, the HRG-ABS are prepared by graft polymerizing less than about 50 wt % of at least one rigid monomer such as a vinyl aromatic monomer, an acrylic monomer, a vinyl nitrile monomer or a mixture thereof in the presence of more than about 50 wt % of a preformed rubbery polydiene substrate such as 1,3-diene polymer or copolymer thereof. In particular, the graft copolymers comprise from 50 wt % to 90 wt % of a rubbery substrate polydiene such as for example polybutadiene or polyisoprene or a copolymer of a 1,3-diene with less than about 50 wt % of a copolymerizable vinyl or vinylidene monomer such as for example an olefin, a styrene monomer, a (meth)acrylate ester monomer or a (meth)acrylonitrile monomer, and from 10 to 50 wt % of a rigid graft phase formed from at least one rigid vinylidene or vinyl monomer selected from the group consisting of vinyl aromatic monomers, (meth)acrylic monomers, vinyl nitrile monomers and mixtures thereof.

In the preparation of the high rubber graft copolymers, either or both the rubbery or the rigid graft component may further include minor amounts, less than about 5 wt % of a copolymerization crosslinking monomer(s) such as di- or tri-functional monomer or combinations thereof to increase graft linking or/and crosslinking of either or both components. Preferably, crosslinking monomer(s) are absent. The high rubber graft copolymers can be prepared by conventional polymerization processes including emulsion, suspension, sequential emulsion-suspension, bulk and solution polymerization processes. These methods are known in the polymerization art, specifically directed toward the preparation of a wide variety of high rubber graft copolymers for impact modification of thermoplastic resins. Suitable specific embodiments of the particular impact modifiers can be prepared by any aforementioned polymerization means. The preferred polymerization processes are in aqueous media and include emulsion and suspension methods. The preferred process for preparing the rubbery portion is by way of emulsion polymerization as taught in the art.

The rubber forms the backbone of the graft polymer, and is a polymer of a conjugated diene having the formula (5):

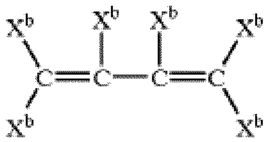

(5)

wherein $X^b$ is hydrogen, C --C alkyl, chlorine, or bromine. Examples of dienes that may be used are butadiene, isoprene, 1,3-hepta-diene, methyl-1,3-pentadiene, 2,3-dimethyl-1,3-butadiene, 2-ethyl-1,3-pentadiene; 1,3- and 2,4-hexadienes, chloro and bromo substituted butadienes such as dichlorobutadiene, bromobutadiene, dibromobutadiene, mixtures comprising at least one of the foregoing dienes, and the like. A preferred conjugated diene is butadiene. Copolymers of conjugated dienes with other monomers may also be used, for example copolymers of butadiene-styrene, butadiene-acrylonitrile, and the like.

Alternatively, the backbone may be an acrylate rubber, such as one based on n-butyl acrylate, ethylacrylate, 2-ethylhexylacrylate, mixtures comprising at least one of the foregoing, and the like. Additionally, minor amounts of a diene may be copolymerized in the acrylate rubber backbone to yield improved grafting.

After formation of the backbone polymer, a grafting monomer is polymerized in the presence of the backbone polymer. One preferred type of grafting monomer is a monovinylaromatic hydrocarbon having the formula (6):

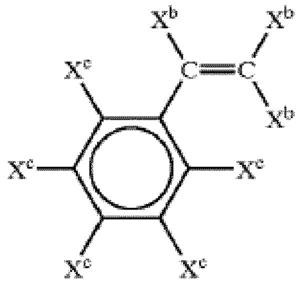

(6)

wherein $X^b$ is as defined above and $X^c$ is hydrogen, C1-C10 alkyl, C1 -C10 cycloalkyl, C1 -C10 alkoxy, C6 -C18 alkyl, C6-C18 aralkyl, C6 -C18 aryloxy, chlorine, bromine, and the like. Examples include styrene, 3-methylstyrene, 3,5-diethylstyrene, 4-n-propylstyrene, alpha-methylstyrene, alpha-methyl vinyltoluene, alpha-chlorostyrene, alpha-bromostyrene, dichlorostyrene, dibromostyrene, tetra-chlorostyrene, mixtures comprising at least one of the foregoing compounds, and the like. The preferred monovinylaromatic hydrocarbons are styrene and/or alpha-methylstyrene.

A second type of grafting monomer that may be polymerized in the presence of the polymer backbone are acrylic monomers of formula (7):

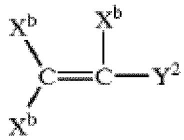

(7)

wherein $X^b$ is as previously defined and $Y^2$ is cyano, C1 -C12 alkoxycarbonyl, or the like. Examples of such acrylic monomers include acrylonitrile, ethacrylonitrile, methacrylonitrile, alpha-chloroacrylonitrile, beta-chloroacrylonitrile, alpha-bromoacrylonitrile, beta-bromoacrylonitrile, methyl acrylate, methyl methacrylate, ethyl acrylate, butyl acrylate, propyl acrylate, isopropyl acrylate, mixtures comprising at least one of the foregoing monomers, and the like. Preferred monomers include acrylonitrile, ethyl acrylate, and methyl methacrylate.

A mixture of grafting monomers may also be used, to provide a graft copolymer. In various aspects, mixtures comprise a monovinylaromatic hydrocarbon and an acrylic monomer. In a further aspect, graft copolymers include acrylonitrile-butadiene-styrene (ABS) and methyl methacrylate-butadiene-styrene (MBS) resins. Suitable high-rubber acrylonitrile-butadiene-styrene resins are available from SABIC Innovative Plastics as under the trade names BLENDEX™ grades 131, 336, 338, 360, and 415.

## 5. SAN COPOLYMER

In various aspects, the blended thermoplastic compositions comprise a styrene-acrylonitrile copolymer ("SAN" or "SAN copolymer"). The SAN copolymer can be manufactured by bulk, suspension, or emulsion polymerization, and is substantially free of impurities, residual acids, residual bases or residual metals that may catalyze the hydrolysis of polycarbonate. In one aspect, the rigid copolymer is manufactured by bulk polymerization using a boiling reactor. SAN copolymers are described in ASTM D4203.

In various aspects, the content of the acrylonitrile monomer in the SAN copolymer is about 10 to about 50 wt%. In an example, the acrylonitrile monomer in the SAN copolymer is about 20 wt%. In a further example, the acrylonitrile monomer in the SAN copolymer can be present in an amount about 25 wt%.

In a further aspect, the styrene monomer in the SAN copolymer is about 68 wt% to about 80 wt%. In a further example, the styrene monomer in the SAN copolymer can be about 70 wt% to about 78 wt%. For example, the styrene monomer in the SAN copolymer can be about 70 wt%.

In a further aspect, the weight average molecular weight of the SAN copolymer can be about 50,000 to about 250,000. In an example, the weight average molecular weight of the SAN copolymer can be about 30,000 to about 600,000.

In a further aspect, the SAN copolymer is present in an amount from about 7 wt% to about 25 wt%. In an example, the SAN copolymer is present in an amount of about 11 wt%. In a further example, the SAN copolymer is present in an amount of about 15 wt%.

## 6. MINERAL FILLER

In one aspect, the disclosure pertains to blended thermoplastic compositions, wherein the blended thermoplastic composition further comprises a mineral filler. For example, the mineral filler is silicate mineral filler such as talc. In an even further example, the mineral filler can be talc selected from a fibrous, modular, needle-shaped, or lamellar talc.

In various aspects, the mineral filler has an average particle size of less than or equal to about 5.0 microns. The mineral filler can have an average particle size of less than or equal to about 3.0 microns. For example, the talc can have an average particle size of less than or equal to about 1 micron.

In a further aspect, the mineral filler has an average largest dimension less than about 5.0 microns, a median particle size of less than 5.0 microns, or both. In an example, the mineral filler can have an average largest dimension less than about 3.0 microns, a median particle size of less than 3.0 microns, or both. For example, the talc can have an average largest dimension less than about 3.0 microns, a median particle size of less than 3.0 microns, or both.

In a further aspect, the mineral filler has an average particle size of about 0.1 micron to about 5.0 micron. In an example, the mineral filler has an average particle size of about 0.1 micron to about 4.0 micron. For an example, the talc can have an average particle size of about 0.1 micron to about 3.0 micron.

In a further aspect, the mineral filler is present in an amount from about 0.5 wt% to about 5 wt%. For example, the mineral filler can be talc present in an amount from about 0.5 wt% to about 3 wt%. In another example, the mineral filler can be talc present in an amount of about 2 wt%.

## 7. COLORANT

In various aspects, the blended thermoplastic composition can comprise a colorant. Suitable colorants include, for example titanium dioxide, anthraquinones, perylenes, perinones, indanthrones, quinacridones, xanthenes, oxazines, oxazolines, thioxanthenes, indigoids, thioindigoids, naphthalimides, cyanines, xanthenes, methines, lactones, coumarins, bis-benzoxazolylthiophene (BBOT), napthalenetetracarboxylic derivatives, monoazo and disazo pigments, triarylmethanes, aminoketones, bis(styryl)biphenyl derivatives, and the like, as well as combinations including at least one of the foregoing colorants. Colorants are generally used in amounts of from 0.1 to 5 parts by weight, based on 100 parts by weight of the total composition, excluding any filler. In some embodiments, the blended thermoplastic can comprise a colorant in an amount from about 0.01 wt% to about 10 wt% of the composition. In other embodiments, the blended thermoplastic can comprise a colorant in an amount from 0.001 wt% to about 1.2 wt% of the composition.

In an aspect, the blended thermoplastic composition can comprise a colorant comprising carbon black. The blended thermoplastic composition can contain carbon black in an amount from about 0.001 wt% to about 1.2 wt% carbon black. In an example, carbon black can be present in the composition at about 0.5 wt% of the total weight of the composition.

## 8. OTHER ADDITIVES

In addition to the polymer blend, the HRG-ABS copolymer, the polycarbonate polysiloxane copolymer, the SAN

copolymer, the flame retardant, the mineral filler, and a colorant, the disclosed polymer compositions can optionally comprise one or more additives conventionally used in the manufacture of molded thermoplastic parts with the proviso that the optional additives do not adversely affect the desired properties of the resulting composition. Mixtures of optional additives can also be used. Such additives can be mixed at a suitable time during the mixing of the components for forming the composite mixture. For example, the disclosed compositions can comprise one or more lubricants, plasticizers, ultraviolet light absorbing additives, anti-dripping agents, dyes, pigments, stabilizers, anti-static agents, flame-retardants, impact modifiers, colorants, antioxidant, metal deactivators, chain extenders, and/or mold release agents.

## 9. METHODS OF MANUFACTURE

The blended thermoplastic compositions of the present disclosure can be blended with the aforementioned ingredients by a variety of methods involving intimate admixing of the materials with any additional additives desired in the formulation. Because of the availability of melt blending equipment in commercial polymer processing facilities, melt processing methods are generally preferred. Illustrative examples of equipment used in such melt processing methods include: co-rotating and counter-rotating extruders, single screw extruders, co-kneaders, disc-pack processors and various other types of extrusion equipment. The temperature of the melt in the present process is preferably minimized in order to avoid excessive degradation of the resins. It is often desirable to maintain the melt temperature between about 230 °C and about 350 °C in the molten resin composition, although higher temperatures can be used provided that the residence time of the resin in the processing equipment is kept short. In some embodiments the melt processed composition exits processing equipment such as an extruder through small exit holes in a die. The resulting strands of molten resin are cooled by passing the strands through a water bath. The cooled strands can be chopped into small pellets for packaging and further handling.

Compositions can be manufactured by various methods, including batch or continuous techniques that employ kneaders, extruders, mixers, and the like. For example, the composition can be formed as a melt blend employing a twin-screw extruder. In some embodiments at least some of the components are added sequentially. For example, the polycarbonate component and the impact modifier component, can be added to the extruder at the feed throat or in feeding sections adjacent to the feed throat, or in feeding sections adjacent to the feed throat, while the flame retardant component can be added to the extruder in a subsequent feeding section downstream. Alternatively, the sequential addition of the components may be accomplished through multiple extrusions. A composition may be made by preextrusion of selected components, such as the polycarbonate component and the impact modifier component to produce a pelletized mixture. A second extrusion can then be employed to combine the preextruded components with the remaining components. The flame retardant component can be added as part of a masterbatch or directly. The extruder can be a two lobe or three lobe twin screw extruder.

## 10. ARTICLES OF MANUFACTURE

Shaped, formed, or molded articles including the polymer compositions are also provided. The polymer compositions can be molded into useful shaped articles by a variety of means such as injection molding, extrusion, rotational molding, blow molding and thermoforming to form articles such as, for example, personal computers, notebook and portable computers, cell phone antennas and other such communications equipment, medical applications, RFID applications, automotive applications, and the like. Techniques for such manufacture are known to those skilled in the art. In some embodiments, the molded article further comprises a conductive path formed by activation with a laser. In various aspects, the polymer composition can be used in the field of electronics. In a further aspect, non-limiting examples of fields which can use the disclosed blended polymer compositions include electrical, electro-mechanical, Radio Frequency (RF) technology, telecommunication, automotive, aviation, medical, sensor, military, and security. In a still further aspect, the use of the disclosed blended polymer compositions can also be present in overlapping fields, for example in mechatronic systems that integrate mechanical and electrical properties which may, for example, be used in automotive or medical engineering.

In one aspect, the present disclosure pertains to shaped, formed, or molded articles comprising the blended thermoplastic compositions. The blended thermoplastic compositions can be molded into useful shaped articles by a variety of means such as injection molding, extrusion, rotational molding, blow molding and thermoforming to form articles. The blended thermoplastic compositions described herein can also be made into film and sheet as well as components of laminate systems. For example, a method of manufacturing an article comprises melt blending the polycarbonate component, the HRG-ABS copolymer component, the SAN copolymer component, the flame retardant component, the mineral filler, and a colorant; and molding the extruded composition into an article. Such an extrusion can be performed with a twin-screw extruder.

Formed articles include, for example, personal computers, notebook and portable computers, cell phone antennas and other such communications equipment, medical applications, RFID applications, automotive applications,

and the like. The formed article can be a computer and business machine housing such as a housing for high end laptop personal computers, monitors, a hand held electronic device housing such as a housing for smart phones, tablets, music devices electrical connectors, and components of lighting fixtures, ornaments, home appliances, and the like.

In many aspects, the present disclosure pertains to electrical or electronic devices comprising the disclosed blended thermoplastic compositions. For example, the electrical or electronic device comprising the disclosed blended thermoplastic compositions can be a cellphone, a MP3 player, a computer, a laptop, a camera, a video recorder, an electronic tablet, a pager, a hand receiver, a video game, a calculator, a wireless car entry device, an automotive part, a filter housing, a luggage cart, an office chair, a kitchen appliance, an electrical housing, an electrical connector, a lighting fixture, a light emitting diode, an electrical part, or a telecommunications part.

In various aspects, the thermoplastic composition can be used in the field of electronics. Non-limiting examples of fields which can use the disclosed blended thermoplastic polymer compositions include electrical, electro-mechanical, radio frequency (RF) technology, telecommunication, automotive, aviation, medical, sensor, military, and security. The use of the disclosed blended thermoplastic polymer compositions can also be present in overlapping fields, for example in mechatronic systems that integrate mechanical and electrical properties which may, for example, be used in automotive or medical engineering.

In a further aspect, the article is an electronic device, automotive device, telecommunication device, medical device, security device, or mechatronic device. In a still further aspect, the article is selected from a computer device, electromagnetic interference device, printed circuit, Wi-Fi device, Bluetooth device, GPS device, cellular antenna device, smart phone device, automotive device, medical device, sensor device, security device, shielding device, RF antenna device, LED device, and RFID device. The article can be selected from a computer device, sensor device, security device, RF antenna device, LED device and RFID device.

Molded articles according to the present disclosure can be used to produce a device in one or more of the foregoing fields. For example, non-limiting examples of such devices in the automotive field can include use of the blended thermoplastic compositions in a vehicle's interior include adaptive cruise control, headlight sensors, windshield wiper sensors, and door/window switches. Furthermore, the disclosed blended thermoplastic compositions can also be used for purposed related to a vehicle's exterior such as pressure and flow sensors for engine management, air conditioning, crash detection, and exterior lighting fixtures.

The resulting disclosed compositions can also be used to provide any desired shaped, formed, or molded articles. For example, the disclosed compositions can be molded into useful shaped articles by a variety of means such as injection molding, extrusion, rotational molding, blow molding and thermoforming. As noted above, the disclosed compositions are particularly well suited for use in the manufacture of electronic components and devices. As such, according to some aspects, the disclosed compositions can be used to form articles such as printed circuit board carriers, burn in test sockets, flex brackets for hard disk drives, and the like.

In various aspects, the present invention pertains to and includes at least the following aspects.

Aspect 1: A thermoplastic composition exhibiting improved surface appearance comprising: (a) from about 50 wt% to about 70 wt% of a polycarbonate component; (b) from greater than about 0 wt% to about 5 wt% of a polycarbonate polysiloxane copolymer component; (c) from about 5 wt% to about 20 wt% of a high-rubber grafted vinyl copolymer component; (d) from about 5 wt% to about 20 wt% of a styrene-acrylonitrile copolymer; (e) from greater than about 0 wt% to about 5 wt% of a polyethylene copolymer component; (f) from about 5 wt% to about 20 wt% of flame retardant component; (g) from about 0.5 wt% to about 5 wt% of a mineral filler; wherein all weight percent values are based on the total weight of the composition; and further comprising a colorant in an amount from about 0.001 wt% to about 10 wt% of the total weight of a) to g).

Aspect 2: A thermoplastic composition exhibiting improved surface appearance comprising: (a) from about 40 wt% to about 70 wt% of a polycarbonate component; (b) from greater than about 0 wt% to about 5 wt% of a polycarbonate polysiloxane copolymer component; (c) from about 5 wt% to about 15 wt% of a high-rubber grafted acrylonitrile-butadiene-styrene copolymer component; (d) from about 5 wt% to about 15 wt% of a styrene-acrylonitrile copolymer; (e) from about 10 wt% to about 20 wt% of a phosphorous containing flame retardant component; (f) from about 0.5 wt% to about 3 wt% of a mineral filler; wherein all weight percent values are based on the total weight of the composition; and further comprising a colorant in an amount from about 0.01 wt% to about 10 wt% of the total weight of a) to f).

Aspect 3: The thermoplastic composition of aspect 2, wherein the polycarbonate component comprises a polycarbonate mixture of at least first polycarbonate and a second polycarbonate, wherein the weight of either the first polycarbonate or the second polycarbonate is greater than at least 50% of the total weight of the polycarbonate mixture.

Aspect 4: The thermoplastic composition of aspect 2, wherein the polycarbonate component comprises an aromatic polycarbonate.

Aspect 5: The thermoplastic composition of any of aspects 2-4, further comprising a polyethylene copolymer component.

Aspect 6: The thermoplastic composition of aspect 5, further comprising from greater than about 0 wt% to about 5 wt% of a polyethylene copolymer component.

Aspect 7: The thermoplastic composition of any of aspects 2-6, wherein the mineral filler is talc.

Aspect 8: The thermoplastic composition of aspect 7, wherein the mineral filler has an average particle size of from about 0.05 $\mu$m to about 3 $\mu$m.

Aspect 9: The thermoplastic composition of any of aspects 2-8, wherein the flame retardant contains phosphorous.

Aspect 10: The polymer composition of any one of aspects 2-9, further comprising an additive.

Aspect 11: The polymer composition of aspect 10, wherein additional additives are present in an amount from about 0.01 wt% to 3 wt%, based on the total weight of the thermoplastic composition.

Aspect 12: The polymer composition of any one of aspects 10-11, wherein the additional additive comprises a plasticizer, a stabilizer, an anti-static agent, an impact modifier, a colorant, an antioxidant, a mold release agent, an UV absorber, a lubricant, or a blowing agent, or a combination thereof.

Aspect 13: The thermoplastic composition of any one of aspects 2-12, wherein the thermoplastic composition has a Charpy impact strength of at least about 7 $KJ/m^2$ using the ISO 179 test standard.

Aspect 14: The thermoplastic composition of any one of aspects 2-13, wherein the thermoplastic composition has a heat deflection temperature of at least about 76 °C using the ISO 75, 18.6 kg test standard

Aspect 15: The thermoplastic composition of any one of aspects 2-14, wherein the thermoplastic composition has a spiral flow length of at least about 500 at 2 mm thickness.

Aspect 16: The thermoplastic composition of any one of aspects 2-15, wherein a molded sample of the thermoplastic composition is able to achieve a UL 94 5VB rating at a thickness of at least about 1.8 mm.

Aspect 17: The thermoplastic composition of any one of aspects 2-16, wherein the thermoplastic composition exhibits no clear streak.

Aspect 18: A thermoplastic composition exhibiting improved surface appearance comprising: (a) from about 50 wt% to about 70 wt% of a polycarbonate component; (b) from greater than about 0 wt% to about 5 wt% of a polycarbonate polysiloxane copolymer component; (c) from about 5 wt% to about 20 wt% of a high-rubber grafted vinyl copolymer component; (d) from about 5 wt% to about 20 wt% of a styrene-acrylonitrile copolymer; (e) from greater than about 0 wt% to about 5 wt% of a polyethylene copolymer component; (f) from about 5 wt% to about 20 wt% of flame retardant component; (g) from about 0.5 wt% to about 5 wt% of a mineral filler; wherein all weight percent values are based on the total weight of the composition; and further comprising a colorant in an amount from about 0.01 wt% to about 10 wt% of the total weight of a) to g); wherein the colorant comprises carbon black in an amount from 0.001 wt% to about 1.2 wt% of the total weight of a) to g).

Aspect 19: An article of manufacture comprising the thermoplastic composition of any one of aspects 1 - 18.

Aspect 20: A method of forming a thermoplastic composition comprising mixing: (a) from about 50 wt% to about 70 wt% of a polycarbonate component, (b) from greater than about 0 wt% to about 5 wt% of a polycarbonate polysiloxane copolymer component; (c) from about 5 wt% to about 15 wt% of a high-rubber grafted acrylonitrile-butadiene-styrene copolymer component; (d) from about 5 wt% to about 15 wt% of a styrene-acrylonitrile copolymer; (e) from about 10 wt% to about 20 wt% of a phosphorous containing flame retardant component; and (f) from about 0.5 wt% to about 3 wt% of a mineral filler; wherein all weight percent values are based on the total weight of the composition; and further comprising a colorant in an amount from about 0.01 wt% to about 10 wt% of the total weight of a) to f).

Aspect 21: The method of aspect 20 further comprising extruding the thermoplastic composition.

Aspect 22: The method of aspect 20 further comprising injection molding the thermoplastic composition.

Aspect 23: An article manufactured by the method of aspect 20.

Aspect 24: A method comprising: (a) forming a thermoplastic composition, wherein the thermoplastic composition comprises: (b) from about 40 wt% to about 70 wt% of a polycarbonate component; (c) from greater than about 0 wt% to about 5 wt% of a polycarbonate polysiloxane copolymer component; (d) from about 5 wt% to about 20 wt% of a high-rubber grafted vinyl copolymer component; (e) from about 5 wt% to about 20 wt% of a styrene-acrylonitrile copolymer; (f) from about 5 wt% to about 20 wt% of flame retardant component; (g) from about 0.5 wt% to about 5 wt% of a mineral filler; wherein all weight percent values are based on the total weight of the composition; and further comprising a colorant in an amount from about 0.0001 wt% to about 10 wt% of the total weight of a) to f).

Aspect 25: A thermoplastic composition exhibiting improved surface appearance comprising: from about 50 wt% to about 70 wt% of a polycarbonate component; from about 5 wt% to about 20 wt% of a high-rubber grafted acrylonitrile-butadiene-styrene copolymer component or a methyl (meth) acrylate-butadiene-styrene component; from about 5 wt% to about 20 wt% of a styrene-acrylonitrile copolymer; from about 5 wt% to about 20 wt% of flame retardant component; from about 0.5 wt% to about 5 wt% of a mineral filler; wherein all weight percent values are based on the total weight of the composition; and further comprising a colorant in an amount from about 0.001 wt% to about 10 wt% of the total weight of a) to e).

Aspect 25: The thermoplastic composition of aspect 24, wherein the colorant comprises carbon black in an amount

from about 0.001 wt% to about 1.2 wt% of the total weight of a) to e).

Aspect 26: A thermoplastic composition exhibiting improved surface appearance comprising: from about 40 wt% to about 70 wt% of a polycarbonate component; from about 5 wt% to about 15 wt% of a high-rubber grafted acrylonitrile-butadiene-styrene copolymer component or a methyl (meth) acrylate-butadiene-styrene component; from about 5 wt% to about 15 wt% of a styrene-acrylonitrile copolymer; from about 10 wt% to about 20 wt% of a phosphorous containing flame retardant component; from about 0.5 wt% to about 3 wt% of a mineral filler, wherein all weight percent values are based on the total weight of the composition; and further comprising a colorant in an amount from about 0.001 wt% to about 10 wt% of the total weight of a) to e).

Aspect 27: The thermoplastic composition of any of aspects 24-26, wherein the polycarbonate component comprises a polycarbonate mixture of at least a first polycarbonate having a weight average molecular weight equal to or greater than 45000 by polystyrene standard and a second polycarbonate having a weight average molecular weight less than 45000 by polystyrene standard, wherein the loading of the first polycarbonate is greater than at least 50% of the total weight of the polycarbonate mixture.

Aspect 28: The thermoplastic composition of any of aspects 24-27, wherein the polycarbonate component comprises an aromatic polycarbonate.

Aspect 29: The thermoplastic composition of any of aspects 24-28, further comprising a polyethylene copolymer component present in an amount from greater than about 0 wt% to about 5 wt%, based on the total weight of the thermoplastic composition.

Aspect 30: The thermoplastic composition of any of aspects 24-29, further comprising a polycarbonate polysiloxane copolymer component present in an amount from greater than about 0 wt% to about 5 wt%, based on the total weight of the thermoplastic composition.

Aspect 31: The thermoplastic composition of any one of aspects 24-30, wherein the mineral filler is talc or clay, or both.

Aspect 32: The thermoplastic composition of aspect 31, wherein the mineral filler has an average particle size of from about 0.05 μm to about 3 μm.

Aspect 33: The thermoplastic composition of any of aspects 24-32, wherein the flame retardant contains phosphorous.

Aspect 34: The thermoplastic composition of aspect 33, further comprising an additive in an amount from about 0.01 wt% to 3 wt%, based on the total weight of the thermoplastic composition, and wherein the additive comprises a plasticizer, a stabilizer, an anti-static agent, an impact modifier, a colorant, an antioxidant, a mold release agent, an UV absorber, a lubricant, or a blowing agent, or a combination thereof.

Aspect 35: The thermoplastic composition of any of aspects 24-34, wherein the high-rubber grafted acrylonitrile-butadiene-styrene copolymer component or a methyl (meth) acrylate-butadiene-styrene component have a mean rubber particle size of less than about 0.5 μm..

Aspect 36: The thermoplastic composition of any of aspects 24-35, wherein the thermoplastic composition has a Charpy impact strength of at least about 7 $KJ/m^2$ using the ISO 179 test standard.

Aspect 37: The thermoplastic composition of any of aspects 24-36, wherein the thermoplastic composition has a heat deflection temperature of at least about 76 °C using the ISO 75, 18.6 kg test standard.

Aspect 38: The thermoplastic composition of any of aspects 24-37, wherein the thermoplastic composition has a spiral flow length of at least about 500 at 2 mm thickness.

Aspect 39: The thermoplastic composition of any of aspects 24-38, wherein a molded sample of the thermoplastic composition is able to achieve a UL 94 5VB rating at a thickness of at least about 1.8 mm.

Aspect 40: The thermoplastic composition of any of aspects 24-39, wherein the thermoplastic composition exhibits no clear streak.

Aspect 41: A method of forming a thermoplastic composition comprising mixing: from about 50 wt% to about 70 wt% of a polycarbonate component; from about 5 wt% to about 20 wt% of a high-rubber grafted acrylonitrile-butadiene-styrene copolymer component or a methyl (meth) acrylate-butadiene-styrene component; from about 5 wt% to about 20 wt% of a styrene-acrylonitrile copolymer; from about 5 wt% to about 20 wt% of a phosphorous containing flame retardant component; from about 0.5 wt% to about 5 wt% of a mineral filler, wherein all weight percent values are based on the total weight of the composition; and further comprising a colorant in an amount from about 0.01 wt% to about 10 wt% of the total weight of a) to e), wherein the thermoplastic composition exhibits no clear streak.

Aspect 42: The method of aspect 41, further comprising one of extruding the thermoplastic composition and injection molding the thermoplastic composition.

Aspect 43: An article manufactured by the method of aspect 41.

## EXAMPLES

The following examples are put forth so as to provide those of ordinary skill in the art with a complete disclosure

and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

The materials shown in Table 1 were used to prepare the compositions described and evaluated herein.

**Table 1.**

| Component | Chemical description |
|---|---|
| PC1 | Polycarbonate; $M_w$ of 36,700 by Polystyrene [PS] standards; ML5221 |
| PC2 | Polycarbonate; $M_w$ of 36,100 by Polystyrene [PS] standards; 172L |
| PC3 | Polycarbonate; $M_w$ of 39,500 by Polystyrene [PS] standards; PC2200 |
| PC4 | Polycarbonate; $M_w$ of 54,500 by Polystyrene [PS] standards; |
| | 105-1 |
| PC5 | Polycarbonate; $M_w$ of 52,400 by Polystyrene [PS] standards; 102L |
| PC6 | Polycarbonate; $M_w$ of 51,900 by Polystyrene [PS] standards; PC0700 |
| PC-Si | Polycarbonate polysiloxane copolymer. 20% polycarbonate copolymer, PCP endcapped. |
| HRG-ABS 1 | High rubber grafted acrylonitrile-butadiene-styrene resin. Rubber particle size is about 0.3 micron. About 50 - 52 wt% rubber content; UX050 |
| HRG-ABS2 | High rubber grafted acrylonitrile-butadiene-styrene resin Rubber particle size is about 0.3 micron. 58.7-63.7 % rubber content; C874202 |
| MBS | Methyl (meth) acrylate-butadiene-styrene copolymer. Rubber particle size is about 0.24 microns. Paraloid EXL 2691 |
| SAN1 | Styrene-acrylonitrile copolymer; $M_w$ of 60,900 by Polystyrene [PS] standards; 25 % acrylonitrile content; C29355 |
| SAN2 | Styrene-acrylonitrile copolymer; $M_w$ of 151,000 by Polystyrene [PS] standards; 30 % acrylonitrile content; SR 30B |
| Bulk-ABS | Bulk acrylonitrile-butadiene-styrene comprising about 16-17 wt% butadiene content. Average rubber particle size is about 1.6 microns; AT07/B |
| PE | Ethylene, 1-butene copolymer; NUCG5381 |
| FR | Flame retardant. Bisphenol A bis(diphenylphosphate) |
| TALC | Fine talc. Surface- modified talc (magnesium silicate hydrate) with a mean particle size of 1.0-1.3 μm |
| CLAY | Kaolin Clay; KaMin HG90, median particle size of 0.4 microns |
| COL1 | Colorant-Carbon black; R203. MONARCH 800 |
| COL2 | Colorant-Bright White $TiO_2$; R10834 |
| COL3 | Colorant-Pigment Red 101 (Dark Red Iron Oxide) D; R60600 |
| COL4 | Colorant; Pigment Blue 28 (I - Cobalt Blue) ; 42-250A |
| COL5 | Colorant; Solvent Green (3(1,4-bis-(p-toluidino)-9,10-anthraquinone); R32P |
| COL6 | Colorant - Solvent Red 179; R6125. Macrolex Red E2G Gran |
| COL7 | Colorant - Disperse Yellow 201; R885. Macrolex Yellow 6G Gran |

(continued)

| Component | Chemical description |
|---|---|
| TSAN | PTFE encapsulated in SAN (50 wt% PTFE, 50 wt% SAN). Styrene-acrylonitrile copolymer encapsulated polytetrafluoroethylene. |
| PETS | Pentaerythritol tetrastearate |
| AOS1 | Antioxidant; Octadecyl-3(3, 5-di-*tert*-butyl-4-hydroxyphenyl)propionate; MKAO50 |
| AOS2 | Antioxidant; Tris(2,4-di-tert-butylphenyl)phosphite. |

Physical measurements were made using the tests and test methods described herein.
Molecular weight measurement by GPC

Equipment: Tosoh HLC 8320GPC EcoSEC
Detector: UV@254nm
Flow rate: 0.6ml/min
Column: TOSOH TSKgel SuperH5000, H4000 and H2500
Column oven temperature: 40 °C
Moving phase: Chloroform (highest quality) from Kishida Chemical
Molecular weight calibration: Mono-dispersed polystyrene.

All samples were prepared by melt extrusion on a twin screw extruder, using a nominal melt temperature of 250 °C and operated at 350 rpm. In each of the examples, sample batches (15 kg) were prepared by compounding the materials in a JSW 44 mm twin screw extruder (TEX44 alpha II). The barrel temperatures ranged from 250 °C to 260 °C. The screw speed was 350 rpm and the feed rate was 150 kg/hr. To make test specimens, the dried pellets were injection molded to form appropriate test samples with barrel temperature 235 °C and mold temperature set to 60 °C.
Charpy Impact Strength (CIS) tests were carried out on molded samples (bars) according to ISO 179 at 23 °C using a 4 J hammer.
Heat deflection temperature ("HDT") was determined in accordance with ISO 75 test standards at 18.6 kg on samples with 4.0 mm thickness.
Spiral flow length was determined according to the procedure as followed. Pelletized thermoplastic composition is loaded into a molding machine with a barrel capacity of 188 $cm^3$. A temperature range suitable to polymer flow is established in the mold and barrel at 60 °C - 80 °C for the mold and 240 °C to 280 °C for the barrel. The thermoplastic composition, after melting and temperature equilibration, is injected into the selected channel of the mold at 60 MPa to 120 MPa and an injection speed of 60 mm/s at for a minimum flow time of 2 seconds at 260 °C using molding machine FANUC S-200i-150B with 2.0 wall thickness. Successive samples are generated using a total molding cycle time of 35 seconds and retained after 10 runs have been completed, or when successively prepared samples are of consistent size. Five samples are collected, measured and an average length for the five samples is reported.
Streak performance tests were performed according to the method as follows. FIG. 1 presents the schematic of a molded tool for streak evaluation. In an aspect, a sample of the thermoplastic composition can be molded into the mold tool according to certain parameters. The sample is molded to feature flat disk at a thickness of about 1 to 2 mm and having a diameter of about 150 mm to about 400 mm. The disk includes cylinders protruding from a single planar surface of the disk. The cylinders are radially positioned at about 50 mm from a gate disposed at the center of the disk. Each cylinder has a center hole which extends from the top open end of the cylinder and through the axis of the disk. The height of each cylinder is from about 5 mm to 20 mm, and the diameter is from about 5 mm to about 10 mm. Streak evaluation is determined according to whether white lines, or streaks, are readily apparent about the cylinder holes of the molded sample. Visible white streaks appearing as lines in a fan shape extending from the cylinder cavity to the outer perimeter indicate that the sample fails.
Flammability tests were performed following the procedure of Underwriter's Laboratory Bulletin 94 entitled "Tests for Flammability of Plastic Materials, UL 94". Several ratings can be applied based on the rate of burning, time to extinguish, ability to resist dripping, and whether or not drips are burning. Samples for testing are bars having dimensions of 125 mm length x 13 mm width by no greater than 13 mm thickness. Bar thicknesses were 0.6 mm or 0.8 mm. Materials can be classified according to this procedure as UL 94 HB (horizontal burn), V0, V1, V2, 5VA and/or 5VB on the basis of the test results obtained for five samples; however, the compositions herein were tested and classified only as V0, V1, and V2, the criteria for each of which are described below.
V0: In a sample placed so that its long axis is 180 degrees to the flame, the period of flaming and/or smoldering after removing the igniting flame does not exceed ten (10) seconds and the vertically placed sample produces no drips

of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 50 seconds.

V1: In a sample placed so that its long axis is 180 degrees to the flame, the period of flaming and/or smoldering after removing the igniting flame does not exceed thirty (30) seconds and the vertically placed sample produces no drips of burning particles that ignite absorbent cotton. Five bar flame out time is the flame out time for five bars, each lit twice, in which the sum of time to flame out for the first (t1) and second (t2) ignitions is less than or equal to a maximum flame out time (t1+t2) of 250 seconds.

V2: In a sample placed so that its long axis is 180 degrees to the flame, the average period of flaming and/or smoldering after removing the igniting flame does not exceed thirty (30) seconds, but the vertically placed samples produce drips of burning particles that ignite cotton. Five bar flame out time is the flame out time for five bars, each lit twice, in which the sum of time to flame out for the first (t1) and second (t2) ignitions is less than or equal to a maximum flame out time (t1+t2) of 250 seconds.

In certain embodiment, the flame retardant compositions are of particular utility in the manufacture flame retardant articles that pass the UL94 vertical burn tests, in particular the UL94 5VB standard. In the UL94 vertical burn test, a flame is applied to a vertically fastened test specimen placed above a cotton wool pad. To achieve a rating of 5VB, burning must stop within 60 seconds after five applications of a flame to a test bar, and there can be no drips that ignite the pad. Various embodiments of the compositions described herein meet the UL94 5VB standard.

A series of blended polycarbonate compositions were prepared as set forth in Table 2 below, using the materials described above in Table 1, wherein all amounts are given in wt%. The compositions of Table 2 were tested for Charpy impact strength, heat deflection temperature, spiral flow length, flammability, and streak appearance. Data for performance of the formulations in the various tests are shown in Table 3.

Table 2 details the examples prepared as well as comparative examples to illustrate the improved qualities achieved by way of the disclosed composition. Examples 1 through 4 (Ex 1 - 4) are prepared with a mixture of polycarbonates wherein a higher molecular weight polycarbonate component is present at more than 50 % of the total weight of the mixture. Comparative Examples 1 through 4 (Comp Ex 1 - 4) have a polycarbonate blend with a higher weight percent of a lower molecular weight polycarbonate. Comp Ex 1 and Ex 1 differ in that Comp Ex 1 contains bulk-ABS, a higher percentage of low molecular weight polycarbonate component, and colorants (Ex 1 contains carbon black). Comparative Examples 2, 3, and 4 are commensurate with representative Examples 2, 3, and 4, varying the polycarbonate ratios and amounts of polycarbonate polysiloxane copolymer, HRG-ABS, SAN, and polyethylene copolymer.

**Table 2.***

| No. | Item | Ex 1 | Ex 2 | Ex 3 | Ex 4 | Comp Ex 1 | Comp Ex 2 | Comp Ex 3 | Comp Ex 4 |
|---|---|---|---|---|---|---|---|---|---|
| | PC1 | | | | | 35.93 | | | |
| | PC2 | | | 17.00 | 17.00 | | 38.34 | 35.34 | 35.34 |
| | PC3 | 17.00 | 17.00 | | | | | | |
| | PC4 | | | | | 32.51 | | | |
| | PC5 | | | 41.74 | 40.74 | | 23.00 | 23.00 | 23.00 |
| | PC6 | 40.74 | 40.74 | | | | | | |
| | PC-Si | 3.00 | 3.00 | 3.00 | 3.00 | | 3.00 | 3.00 | 3.00 |
| | HRG-ABS1 | | | 11.00 | 11.00 | | 8.00 | 11.00 | 14.00 |
| | HRG-ABS2 | 11.00 | 11.00 | | | | | | |
| | SAN1 | 10.00 | 10.00 | 10.00 | 10.00 | | 10.00 | 10.00 | 7.00 |
| | Bulk-ABS | | | | | 18.00 | | | |
| | PE | 1.00 | 1.00 | | 1.00 | | | | |
| | FR | 15.00 | 15.00 | 15.00 | 15.00 | 12.25 | 15.00 | 15.00 | 15.00 |
| | TALC | 1.00 | 1.00 | 1.00 | 1.00 | | 1.00 | 1.00 | 1.00 |
| | TSAN | 0.60 | 0.60 | 0.60 | 0.60 | 0.65 | 1.00 | 1.00 | 1.00 |
| | PETS | 0.50 | 0.50 | 0.50 | 0.50 | 0.50 | 0.50 | 0.50 | 0.50 |
| | AOS1 | 0.08 | 0.08 | 0.08 | 0.08 | 0.08 | 0.08 | 0.08 | 0.08 |
| | AOS2 | 0.08 | 0.08 | 0.08 | 0.08 | 0.08 | 0.08 | 0.08 | 0.08 |
| Formulation Total | | 100 | 100 | 100 | 100 | 100 | 100 | 100 | 100 |

(continued)

| No. | Item | Ex 1 | Ex 2 | Ex 3 | Ex 4 | Comp Ex 1 | Comp Ex 2 | Comp Ex 3 | Comp Ex 4 |
|---|---|---|---|---|---|---|---|---|---|
| | COL1 | | 2 | 2 | 2 | | 2 | 2 | 2 |
| | COL2 | 0.400 | 0.003 | 0.003 | 0.003 | 0.400 | 0.003 | 0.003 | 0.003 |
| | COL3 | | 0.016 | 0.016 | 0.016 | | 0.016 | 0.016 | 0.016 |
| | COL4 | | 0.018 | 0.018 | 0.018 | | 0.018 | 0.018 | 0.018 |
| | COL5 | | 0.0013 | 0.0013 | 0.0013 | | 0.0013 | 0.0013 | 0.0013 |

*Amounts provided in terms of percent of total composition (by weight) except for colorants (COL 1-5), which are present in amounts as a percentage of the formulation total.

All experimental samples (Ex 1 - 4) demonstrate a balance of the desired physical properties, such and impact strength and appearance, when contrasted to the Comparative Examples. In an embodiment, the samples of the disclosed thermoplastic composition show an impact strength of at least about 20 KJ/$m^2$; a spiral flow length of at least about 580 mm; and a UL94 rating of 5VB at a thickness of at least about 1.5 mm. Table 3 shows that the comparative samples exhibit lower values or unfavorable results for several of the administered tests. Comp Ex 1 has a lower impact strength than comparable Ex 1(24.2 KJ/$m^2$ as opposed to 41.5 KJ/$m^2$). Comp Ex1 also suffers from poorer flame retardance and shows clear streaking. Comp Ex1 also has the lowest spiral flow length of any of the samples assessed (538 mm). Accordingly, the high loading of bulk-ABS in Comp Ex1 as opposed to the HRG-ABS in Ex 1 may contribute to these results.

Further, Comparative Examples 2, 3, and 4 also exhibit diminished physical properties in contrast to Examples 2, 3, and 4. Comp Ex 2, having a higher weight percent of low molecular weight polycarbonate (e.g., less than 45000 by polystyrene standard) and lower HRG-ABS amount, has a lower impact strength than Comp Ex 2 (9.6 KJ/$m^2$ as opposed to 27.8 KJ/$m^2$). Indeed, Comp Ex 2 has the lowest impact strength of any sample tested.

Example 3 demonstrates the significance of the high-low molecular weight polycarbonate ratio. Comp Ex 3, differing from Ex 3 in that Ex 3 has a higher percentage of high molecular weight polycarbonate (e.g., equal to or greater than 45000 by polystyrene standard), has a significantly lower impact strength (15.1 KJ/$m^2$ compared to 28.1 KJ/$m^2$ for Example 3).

Comp Ex 4 demonstrates the significance of HRG-ABS and SAN loading. HRG-ABS loading has been increased and free SAN reduced in Comp Ex 4. Comp Ex 4 has the highest impact strength (45.7 KJ/$m^2$), but suffers from a decreased flow and heat deflection temperature. On the other hand, Ex 4 maintains appreciable impact strength without sacrificing heat deflection, spiral flow length, or flame retardance.

Furthermore, Comp Ex 1 exhibits streaking, while Ex 1 does not.

**Table 3.**

| Test* | Unit | Ex 1 | Ex 2 | Ex 3 | Ex 4 | Comp Ex 1 | Comp Ex 2 | Comp Ex 3 | Comp Ex 4 |
|---|---|---|---|---|---|---|---|---|---|
| CIS | KJ/$m^2$ | 41.5 | 27.8 | 28.1 | 26.9 | 24.2 | 9.6 | 15.1 | 45.7 |
| HDT (18.6 kg/cm2) | °C | 77 | 78 | 77 | 78 | 82.5 | 78 | 77 | 74 |
| Spiral Flow Length | mm | - | 600 | 610 | 620 | 538 | 630 | 620 | 562 |
| UL94 (1.5 mm/ 23°C/48h) | - | - | 5VB | 5VB | 5VB | 5VB not met | 5VB | 5VB | 5VB |
| Streak Performance | -- | No clear streak | -- | -- | -- | Visible streaks | -- | -- | -- |

* Carried out as described herein.

In summary, the above examples demonstrate that: a) a polycarbonate blend component having a higher weight percent of a high molecular weight polycarbonate (e.g., equal to or greater than 45000 by polystyrene standard) can increase the desirable mechanical properties of the thermoplastic; b) loading of high-rubber-graft ABS can diminish or deter streaking on the surface of a molded thermoplastic composition; c) a combination of higher percentage high

molecular weight polycarbonate (e.g., equal to or greater than 45000 by polystyrene standard), high rubber graft ABS, a SAN copolymer, and a colorant can deliver balanced physical and aesthetic qualities of a thermoplastic composition.

**Table 4***

| No. | Item | Ex A1 | Ex A2 | Ex A3 | Ex A4 | Ex A5 | Ex A6 | Ex A7 | Ex A8 |
|---|---|---|---|---|---|---|---|---|---|
| | PC3 | 17 | 22 | 22 | 22 | 20.66 | 22 | 22 | 22 |
| | PC6 | 40.74 | 38.74 | 43.74 | 43.74 | 41.08 | 45.74 | 42.74 | 44.74 |
| | PC-Si | 3 | 3 | | | | | | |
| | HRG-ABS1 | 11 | 8 | | | | | | |
| | MBS | | | 5 | 5 | 5 | 5 | 8 | 5 |
| | SAN1 | 10 | 10 | 10 | 10 | | 8 | 8 | 10 |
| | SAN2 | | | | | 14 | | | |
| | Bulk-ABS | | | | | | | | |
| | PE | 1 | 1 | 1 | 1 | 1 | 1 | 1 | 1 |
| | FR | 15 | 15 | 16 | 16 | 16 | 16 | 16 | 15 |
| | TALC | 1 | 1 | 1 | | 1 | 1 | 1 | 1 |
| | CLAY | | | | 1 | | | | |
| | TSAN | 0.60 | 0.60 | 0.60 | 0.60 | 0.60 | 0.60 | 0.60 | 0.60 |
| | PETS | 0.50 | 0.50 | 0.50 | 0.50 | 0.50 | 0.50 | 0.50 | 0.50 |
| | AOS1 | 0.08 | 0.08 | 0.08 | 0.08 | 0.08 | 0.08 | 0.08 | 0.08 |
| | AOS2 | 0.08 | 0.08 | 0.08 | 0.08 | 0.08 | 0.08 | 0.08 | 0.08 |
| Formulation Total | | 100 | 100 | 100 | 100 | 100 | 100 | 100 | 100 |
| | COL1 | 0.4 | 0.4 | 0.4 | 0.15 | 0.15 | 0.4 | 0.4 | 0.4 |
| | COL6 | | | | 0.2 | 0.2 | | | |
| | COL7 | | | | 0.005 | 0.005 | | | |

*Amounts provided in terms of percent of total composition (by weight) except for colorants (COL 1 and 6-7), which are present in amounts as a percentage of the formulation total.

**Table 5**

| Test* | Unit | Ex A1 | Ex A2 | Ex A3 | Ex A4 | Ex A5 | Ex A6 | Ex A7 | Ex A8 |
|---|---|---|---|---|---|---|---|---|---|
| CIS | $KJ/m^2$ | 33 | 37 | 9 | 9 | 15 | 7 | 49 | 10 |
| HDT (18.6 $kgf/cm^2$) | °C | 77 | 78 | 76 | 76 | 76 | 77 | 78 | 81 |
| Spiral Flow Length | mm | 565 | 594 | 675 | 684 | 570 | 600 | 596 | 654 |
| UL94 5VB (23°C/48h) | - | 1.8 mm | 1.5 mm | 1.8 mm | 1.8 mm | 1.8 mm | 1.8 mm | 1.8 mm | 1.8 mm |
| Streak Performance** | | + | + | ++ | ++ | ++ | ++ | ++ | ++ |

* Carried out as described herein. **Streak Performance. -: Clearly visible and widely spread streak. +: Moderate visible and widely spread streak. ++: Barely visible and widely spread streak. +++: Barely visible and narrow streak.

**Table 6.***

| No. | Item | Ex A9 | Ex A10 | Ex A11 | Ex A12 |
|---|---|---|---|---|---|
| | PC3 | 22 | 22 | 22 | 22 |
| | PC6 | 46.74 | 45.74 | 44.74 | 36.74 |
| | PC-Si | | | | |
| | HRG-ABS1 | | | | |
| | MBS | 5 | 5 | 8 | 5 |
| | SAN1 | 8 | 10 | 8 | |

(continued)

| No. | Item | Ex A9 | Ex A10 | Ex A11 | Ex A12 |
|---|---|---|---|---|---|
| | SAN2 | | | | 18 |
| | Bulk-ABS | | | | |
| | PE | 1 | 1 | 1 | |
| | FR | 15 | 14 | 14 | 16 |
| | TALC | 1 | 1 | 1 | |
| | CLAY | | | | 1 |
| | TSAN | 0.60 | 0.60 | 0.60 | 0.60 |
| | PETS | 0.50 | 0.50 | 0.50 | 0.50 |
| | AOS1 | 0.08 | 0.08 | 0.08 | 0.08 |
| | AOS2 | 0.08 | 0.08 | 0.08 | 0.08 |
| Formulation Total | | 100 | 100 | 100 | 100 |
| | COL1 | 0.4 | 0.4 | 0.4 | 0.4 |
| | COL6 | | | | |
| | COL7 | | | | |

*Amounts provided in terms of percent of total composition (by weight) except for colorants (COL 1 and 6-7), which are present in amounts as a percentage of the formulation total.

**Table 7**

| Test* | Unit | Ex A9 | Ex A10 | Ex A11 | EX A12 |
|---|---|---|---|---|---|
| CIS | $KJ/m^2$ | 8 | 12 | 9 | 8 |
| HDT (18.6 $kgf/cm^2$) | °C | 80 | 82 | 82 | 76 |
| Spiral Flow Length | mm | 575 | 614 | 548 | 604 |
| UL94 5VB (23°C/48h) | - | 1.8 mm | 1.8 mm | 1.8 mm | 1.5 mm |
| Streak Performance** | | ++ | +++ | ++ | +++ |

* Carried out as described herein. **Streak Performance. -: Clearly visible and widely spread streak. +: Moderate visible and widely spread streak. ++: Barely visible and widely spread streak. +++: Barely visible and narrow streak.

**Table 8***

| No. | Item | Comp. Ex A1 | Comp. Ex A2 | Comp. Ex A3 | Comp. Ex A4 | Comp. Ex A5 | Comp. Ex A6 | Comp. Ex A7 | Comp. Ex A8 |
|---|---|---|---|---|---|---|---|---|---|
| | PC3 | 17 | 22 | 22 | 22 | 22 | 22 | 22 | 30.87 |
| | PC6 | 40.74 | 46.74 | 36.74 | 43.74 | 44.74 | 44.74 | 45.74 | 30.87 |
| | PC-Si | 3 | 3 | 13 | | | | | |
| | HRG-ABS1 | | | | | | | | |
| | MBS | | | | | 5 | 5 | 5 | 5 |
| | SAN1 | 10 | 10 | 10 | 10 | 10 | 10 | 10 | |
| | SAN2 | | | | | | | | 14 |
| | Bulk-ABS | 11 | | | 5 | | | | |
| | PE | 1 | 1 | 1 | 1 | 1 | | | 1 |
| | FR | 15 | 15 | 15 | 16 | 16 | 16 | 16 | 16 |
| | TALC | 1 | 1 | 1 | 1 | | 1 | | 1 |
| | CLAY | | | | | | | | |

(continued)

| No. | Item | Comp. Ex A1 | Comp. Ex A2 | Comp. Ex A3 | Comp. Ex A4 | Comp. Ex A5 | Comp. Ex A6 | Comp. Ex A7 | Comp. Ex A8 |
|---|---|---|---|---|---|---|---|---|---|
| | TSAN | 0.60 | 0.60 | 0.60 | 0.60 | 0.60 | 0.60 | 0.60 | 0.60 |
| | PETS | 0.50 | 0.50 | 0.50 | 0.50 | 0.50 | 0.50 | 0.50 | 0.50 |
| | AOS1 | 0.08 | 0.08 | 0.08 | 0.08 | 0.08 | 0.08 | 0.08 | 0.08 |
| | AOS2 | 0.08 | 0.08 | 0.08 | 0.08 | 0.08 | 0.08 | 0.08 | 0.08 |
| Formulation Total | | 100 | 100 | 100 | 100 | 100 | 100 | 100 | 100 |
| | COL1 | 0.4 | 0.4 | 0.4 | 0.4 | 0.4 | 0.4 | 0.4 | 0.15 |
| | COL6 | | | | | | | | 0.2 |
| | COL7 | | | | | | | | 0.005 |

*Amounts provided in terms of percent of total composition (by weight) except for colorants (COL 1 and 6-7), which are present in amounts as a percentage of the formulation total.

**Table 9**

| Test* | Unit | Comp. Ex A1 | Comp. Ex A2 | Comp. Ex A3 | Comp. Ex A4 | Comp. Ex A5 | Comp. Ex A6 | Comp. Ex A7 | Comp. Ex A8 |
|---|---|---|---|---|---|---|---|---|---|
| CIS | $KJ/m^2$ | 18 | **4** | 6 | 5 | 8 | 6 | **4** | 5 |
| HDT (18.6 $kgf/cm^2$) | °C | 78 | 81 | 80 | 78 | 75 | 78 | 75 | 75 |
| Spiral Flow Length | mm | 802 | 698 | 723 | 778 | 670 | 640 | 660 | 612 |
| UL94 5VB (23°C/48h) | - | 1.5 mm | 1.5 mm | 1.5 mm | 1.5 mm | 1.5 mm | 1.5 mm | 1.5 mm | 1.8 mm |
| Streak Performance** | | - | +++ | +++ | - | ++ | ++ | ++ | ++ |

* Carried out as described herein. **Streak Performance. -: Clearly visible and widely spread streak. +: Moderate visible and widely spread streak. ++: Barely visible and widely spread streak. +++: Barely visible and narrow streak.

**Table 10***

| No. | Item | Comp. Ex A9 | Comp. Ex A10 | Comp. Ex A11 | Comp. Ex A12 | Comp. Ex A13 |
|---|---|---|---|---|---|---|
| | PC3 | 22 | 22 | 17 | 22 | 22 |
| | PC6 | 43.74 | 47.74 | 51.74 | 44.74 | 34.74 |
| | PC-Si | | | | | |
| | HRG-ABS1 | | | | | |
| | MBS | 8 | 5 | 7 | 5 | 7 |
| | SAN1 | 8 | 8 | 7 | | |
| | SAN2 | | | | 10 | 18 |
| | Bulk-ABS | | | | | |
| | PE | 1 | 1 | | | |
| | FR | 15 | 14 | 15 | 16 | 16 |
| | TALC | 1 | 1 | 1 | | |
| | CLAY | | | | 1 | 1 |
| | TSAN | 0.60 | 0.60 | 0.60 | 0.60 | 0.60 |
| | PETS | 0.50 | 0.50 | 0.50 | 0.50 | 0.50 |
| | AOS1 | 0.08 | 0.08 | 0.08 | 0.08 | 0.08 |

(continued)

| No. | Item | Comp. Ex A9 | Comp. Ex A10 | Comp. Ex A11 | Comp. Ex A12 | Comp. Ex A13 |
|---|---|---|---|---|---|---|
| | AOS2 | 0.08 | 0.08 | 0.08 | 0.08 | 0.08 |
| Formulation Total | | 100 | 100 | 100 | 100 | 100 |
| | COL1<br>COL2<br>COL3 | 0.4 | 0.4 | 0.4 | 0.4 | 0.4 |
| *Amounts provided in terms of percent of total composition (by weight) except for colorants (COL 1 and 6-7), which are present in amounts as a percentage of the formulation total. | | | | | | |

**Table 11**

| Test* | Unit | Comp. Ex A9 | Comp. Ex A10 | Comp. Ex A11 | Comp. Ex A12 | Comp. Ex A13 |
|---|---|---|---|---|---|---|
| CIS | $KJ/m^2$ | 53 | 54 | 45 | 7 | 41 |
| HDT (18.6 $kgf/cm^2$) | °C | 80 | 81 | 81 | 80 | 73 |
| Spiral Flow Length | mm | 560 | 538 | 490 | 490 | 603 |
| UL94 5VB (23°C/48h) | - | 1.8 mm not met | 1.8 mm not met | 1.8 mm | 1.5 mm | 1.8 mm |
| Streak level** | | ++ | ++ | ++ | +++ | +++ |
| * Carried out as described herein. **Streak level. -: Clearly visible and widely spread streak. +: Moderate visible and widely spread streak. ++: Barely visible and widely spread streak. +++: Barely visible and narrow streak. | | | | | | |

All experimental samples (Ex A1 - A12) demonstrate a balance of the desired physical properties, such and impact strength, HDT, flow, flame retardance and surface appearance, when contrasted to the Comparative Examples. In an embodiment, the samples of the disclosed thermoplastic composition show an impact strength of at least about 7 $KJ/m^2$; a HDT of at least 76 degC; a spiral flow length of at least about 500 mm; a UL94 rating of 5VB at a thickness of at least about 1.8 mm; a streak level of equal or better than +: Moderate visible and widely spread streak. Comp. Ex A1 showed lower impact strength than Ex A1 and clear streaking though spiral flow is highest due to the use of bulk-ABS. Comp. Ex A2 showed lowest impact strength because of the absence of rubber and good streak level. Comp. Ex A3 showed low impact strength even the highest loading of PC Siloxane copolymer because of the absence of rubber and streak level is good. Comp. Ex A4 showed lower impact strength than Ex A3 and clear streaking though spiral flow is high due to the use of bulk-ABS. Comp. Ex A5 showed lower HDT than Ex A3 due to the absence of filler. Comp. Ex A6 showed lower impact strength than Ex A3 due to the absence of polyethylene. Comp. Ex A7 showed lower impact strength and HDT than Ex A3 due to the absence of filler and polyethylene. Comp. Ex A8 showed lower impact strength than Ex A5 due to the higher loading of lower molecular weight PC (e.g., less than 45000 by polystyrene standard) and HDT is also low. Comp. Ex A9 showed poor flame retardance compare to Ex A9 due to the higher loading of rubber. Comp. Ex A10 showed poor flame retardance compare to Ex A11 due to the higher loading of rubber. Comp. Ex A11 showed lower spiral flow length than Ex A19 due to the lower loading of SAN. Comp. Ex A12 showed lower spiral flow length than Ex A4 due to the molecular weight of SAN is high. Comp. Ex A13 showed lower HDT than Ex A4 due to the loading of high molecular weight SAN is high though spiral flow length is higher than Comp. Ex A12.

## Claims

**1.** A thermoplastic composition comprising:

a) from 50 wt% to 70 wt% of a polycarbonate component, wherein the polycarbonate component comprises a polycarbonate mixture of at least a first polycarbonate having a weight average molecular weight equal to or greater than 45000 by polystyrene standard and a second polycarbonate having a weight average molecular weight less than 45000 by polystyrene standard, wherein weight average molecular weight is measured according to the relevant method detailed in the description, wherein the loading of the first polycarbonate is greater than at least 50% of the total weight of the polycarbonate mixture;

b) from 5 wt% to 20 wt% of a high-rubber graft acrylonitrile-butadiene-styrene copolymer component or a methyl (meth) acrylate-butadiene-styrene component;
c) from 5 wt% to 20 wt% of a styrene-acrylonitrile copolymer;
d) from 5 wt% to 20 wt% of flame retardant component;
e) from 0.5 wt% to 5 wt% of a mineral filler;

wherein all weight percent values are based on the total weight of the composition; and further comprising a colorant in an amount from 0.001 wt% to 10 wt% of the total weight of a) to e).

**2.** The thermoplastic composition of claim 1, wherein the colorant comprises carbon black in an amount from 0.001 wt% to 1.2 wt% of the total weight of a) to e).

**3.** The thermoplastic composition of claim 1 comprising:

a) from 40 wt% to 70 wt% of a polycarbonate component as defined in claim 1;
b) from 5 wt% to 15 wt% of a high-rubber graft acrylonitrile-butadiene-styrene copolymer component or a methyl (meth) acrylate-butadiene-styrene component;
c) from 5 wt% to 15 wt% of a styrene-acrylonitrile copolymer;
d) from 10 wt% to 20 wt% of a phosphorous containing flame retardant component;
e) from 0.5 wt% to 3 wt% of a mineral filler

wherein all weight percent values are based on the total weight of the composition;
and further comprising a colorant in an amount from 0.001 wt% to 10 wt% of the total weight of a) to e).

**4.** The thermoplastic composition of any of claims 1 - 3, further comprising a polyethylene copolymer component present in an amount from greater than 0 wt% to 5 wt%, based on the total weight of the thermoplastic composition.

**5.** The thermoplastic composition of any of claims 1 - 4, further comprising a polycarbonate polysiloxane copolymer component present in an amount from greater than 0 wt% to 5 wt%, based on the total weight of the thermoplastic composition.

**6.** The thermoplastic composition of any one of claims 1- 5, wherein the mineral filler is talc or clay, or both.

**7.** The thermoplastic composition of claim 6, wherein the mineral filler has an average particle size of from 0.05 $\mu$m to 3 $\mu$m.

**8.** The thermoplastic composition of any of claims 1 - 7, wherein the flame retardant contains phosphorous.

**9.** The thermoplastic composition of any of claims 1 - 8, wherein the thermoplastic composition has a Charpy impact strength of at least 7 KJ/m$^2$ using the ISO 179 test standard.

**10.** The thermoplastic composition of any of claims 1 - 9, wherein the thermoplastic composition has a heat deflection temperature of at least 76 °C using the ISO 75, 18.6 kg test standard.

**11.** The thermoplastic composition of any of claims 1 - 10, wherein the thermoplastic composition has a spiral flow length of at least 500 at 2 mm thickness.

**12.** A method of forming a thermoplastic composition of any of claims 1-11, comprising mixing:

a) from 50 wt% to 70 wt% of the polycarbonate component;
b) from 5 wt% to 20 wt% of the high-rubber graft acrylonitrile-butadiene-styrene copolymer component or the methyl (meth) acrylate-butadiene-styrene component;
c) from 5 wt% to 20 wt% of the styrene-acrylonitrile copolymer;
d) from 5 wt% to 20 wt% of the flame retardant component, wherein the flame retardant component is a phosphorous containing flame retardant component;
e) from 0.5 wt% to 5 wt% of the mineral filler,

wherein all weight percent values are based on the total weight of the composition; and further comprising the

colorant in an amount from 0.01 wt% to 10 wt% of the total weight of a) to e), wherein weight average molecular weight is measured according to the relevant method detailed in the description, and wherein the thermoplastic composition exhibits no clear streak.

**13.** An article manufactured by the method of claim 12.

**Patentansprüche**

**1.** Thermoplastische Zusammensetzung, umfassend:

a) 50 Gew.-% bis 70 Gew.-% einer Polycarbonatkomponente, wobei die Polycarbonatkomponente ein Polycarbonatgemisch aus mindestens einem ersten Polycarbonat mit einem Gewichtsmittel des Molekulargewichts gleich oder größer als 45000 nach Polystyrolstandard und einem zweiten Polycarbonat mit einem Gewichtsmittel des Molekulargewichts von weniger als 45000 nach Polystyrolstandard umfasst, wobei das Gewichtsmittel des Molekulargewichts nach dem in der Beschreibung beschriebenen relevanten Verfahren gemessen wird, wobei die Beladung des ersten Polycarbonats größer als mindestens 50 % des Gesamtgewichts des Polycarbonatgemischs ist;
b) 5 Gew.-% bis 20 Gew.-% einer Kautschukpfropf-Acrylnitril-Butadien-Styrol-Copolymer-Komponente oder einer Methyl(meth)acrylat-Butadien-Styrol-Komponente;
c) 5 Gew.-% bis 20 Gew.-% eines Styrol-Acrylnitril-Copolymers;
d) 5 Gew.-% bis 20 Gew.-% einer flammhemmenden Komponente;
e) 0,5 Gew.-% bis 5 Gew.-% eines mineralischen Füllstoffes;

wobei alle Gewichtsprozentwerte auf das Gesamtgewicht der Zusammensetzung bezogen sind; und ferner umfassend ein Färbemittel in einer Menge von 0,001 Gew.-% bis 10 Gew.-% des Gesamtgewichts von a) bis e).

**2.** Thermoplastische Zusammensetzung nach Anspruch 1, wobei das Färbemittel Ruß in einer Menge von 0,001 Gew.-% bis 1,2 Gew.-% des Gesamtgewichts von a) bis e) umfasst.

**3.** Thermoplastische Zusammensetzung nach Anspruch 1, umfassend:

a) 40 Gew.-% bis 70 Gew.-% einer Polycarbonatkomponente nach Anspruch 1;
b) 5 Gew.-% bis 15 Gew.-% einer Kautschukpfropf-Acrylnitril-Butadien-Styrol-Copolymer-Komponente oder einer Methyl(meth)acrylat-Butadien-Styrol-Komponente;
c) 5 Gew.-% bis 15 Gew.-% eines Styrol-Acrylnitril-Copolymers;
d) 10 Gew.-% bis 20 Gew.-% einer phosphorhaltigen flammhemmenden Komponente;
e) 0,5 Gew.-% bis 3 Gew.-% eines mineralischen Füllstoffes

wobei alle Gewichtsprozentwerte auf das Gesamtgewicht der Zusammensetzung bezogen sind; und ferner umfassend ein Färbemittel in einer Menge von 0,001 Gew.-% bis 10 Gew.-% des Gesamtgewichts von a) bis e).

**4.** Thermoplastische Zusammensetzung nach einem der Ansprüche 1-3, ferner umfassend eine Polyethylen-Copolymer-Komponente, die in einer Menge von mehr als 0 Gew.-% bis 5 Gew.-% bezogen auf das Gesamtgewicht der thermoplastischen Zusammensetzung vorhanden ist.

**5.** Thermoplastische Zusammensetzung nach einem der Ansprüche 1-4, ferner umfassend eine Polycarbonat-Polysiloxan-Copolymer-Komponente, die in einer Menge von mehr als 0 Gew.-% bis 5 Gew.-% bezogen auf das Gesamtgewicht der thermoplastischen Zusammensetzung vorhanden ist.

**6.** Thermoplastische Zusammensetzung nach einem der Ansprüche 1-5, wobei der mineralische Füllstoff Talkum oder Ton oder beides ist.

**7.** Thermoplastische Zusammensetzung nach Anspruch 6, wobei der mineralische Füllstoff eine durchschnittliche Partikelgröße von 0,05 μm bis 3 μm aufweist.

**8.** Thermoplastische Zusammensetzung nach einem der Ansprüche 1-7, wobei das flammhemmende Mittel Phosphor beinhaltet.

**9.** Thermoplastische Zusammensetzung nach einem der Ansprüche 1-8, wobei die thermoplastische Zusammensetzung eine Charpy-Kerbschlagzähigkeit von mindestens 7 $KJ/m^2$ unter Verwendung der Prüfnorm ISO 179 aufweist.

**10.** Thermoplastische Zusammensetzung nach einem der Ansprüche 1-9, wobei die thermoplastische Zusammensetzung eine Wärmeformbeständigkeitstemperatur von mindestens 76 °C unter Verwendung der Prüfnorm ISO 75, 18,6 kg aufweist.

**11.** Thermoplastische Zusammensetzung nach einem der Ansprüche 1-10, wobei die thermoplastische Zusammensetzung eine spiralförmige Strömungslänge von mindestens 500 bei 2 mm Dicke aufweist.

**12.** Verfahren zum Herstellen einer thermoplastischen Zusammensetzung nach einem der Ansprüche 1-11, umfassend das Mischen von:

a) 50 Gew.-% bis 70 Gew.-% der Polycarbonatkomponente;
b) 5 Gew.-% bis 20 Gew.-% der Kautschukpfropf-Acrylnitril-Butadien-Styrol-Copolymer-Komponente oder der Methyl(meth)acrylat-Butadien-Styrol-Komponente;
c) 5 Gew.-% bis 20 Gew.-% des Styrol-Acrylnitril-Copolymers;
d) 5 Gew.-% bis 20 Gew.-% der flammhemmenden Komponente, wobei die flammhemmende Komponente eine phosphorhaltige flammhemmende Komponente ist;
e) 0,5 Gew.-% bis 5 Gew.-% des mineralischen Füllstoffs,

wobei alle Gewichtsprozentwerte auf dem Gesamtgewicht der Zusammensetzung bezogen sind; und ferner umfassend das Färbemittel in einer Menge von 0,01 Gew.-% bis 10 Gew.-% des Gesamtgewichts von a) bis e), wobei das Gewichtsmittel des Molekulargewichts nach dem in der Beschreibung beschriebenen relevanten Verfahren gemessen wird und wobei die thermoplastische Zusammensetzung keinen klaren Streifen aufweist.

**13.** Artikel, hergestellt nach dem Verfahren nach Anspruch 12.

## Revendications

**1.** Composition thermoplastique comprenant :

a) de 50% en poids à 70% en poids d'un composant de polycarbonate, dans laquelle le composant de polycarbonate comprend un mélange de polycarbonates d'au moins un premier polycarbonate ayant une moyenne en poids du poids moléculaire égale à ou supérieure à 45000 selon la norme du polystyrène et un second polycarbonate ayant une moyenne en poids du poids moléculaire inférieure à 45000 selon la norme du polystyrène, dans laquelle la moyenne en poids du poids moléculaire est mesurée selon le procédé pertinent détaillé dans la description, dans laquelle la charge du premier polycarbonate est supérieure à au moins 50% du poids total du mélange de polycarbonates ;
b) de 5% en poids à 20% en poids d'un composant copolymère d'acrylonitrile-butadiène-styrène de greffon à haute teneur en caoutchouc ou d'un composant de (méth) acrylate-butadiène-styrène de méthyle ;
c) de 5% en poids à 20% en poids d'un copolymère de styrène-acrylonitrile ;
d) de 5% en poids à 20% en poids de composant d'agent ignifugeant ;
e) de 0,5% en poids à 5% en poids d'une charge minérale ;

dans laquelle toutes les valeurs de pourcentage en poids sont rapportées au poids total de la composition ; et comprenant en outre un colorant dans une quantité allant de 0,001% en poids à 10% en poids du poids total de a) à e).

**2.** La composition thermoplastique de la revendication 1, dans laquelle le colorant comprend du noir de carbone dans une quantité allant de 0,001% en poids à 1,2% en poids du poids total de a) à e).

**3.** La composition thermoplastique de la revendication 1 comprenant :

a) de 40% en poids à 70% en poids d'un composant de polycarbonate tel que défini dans la revendication 1 ;
b) de 5% en poids à 15% en poids d'un composant copolymère d'acrylonitrile-butadiène-styrène de greffon à haute teneur en caoutchouc ou d'un composant de (méth) acrylate-butadiène-styrène de méthyle ;
c) de 5% en poids à 15% en poids d'un copolymère de styrène-acrylonitrile ;

d) de 10% en poids à 20% en poids d'un composant d'agent ignifugeant contenant du phosphore ;
e) de 0,5% en poids à 3% en poids d'une charge minérale

dans laquelle toutes les valeurs de pourcentage en poids sont rapportées au poids total de la composition ;
et comprenant en outre un colorant dans une quantité allant de 0,001% en poids à 10% en poids du poids total de a) à e).

**4.** La composition thermoplastique de l'une des revendications 1-3 comprenant en outre un composant de copolymère de polyéthylène présent dans une quantité allant de plus de 0% en poids à 5% en poids, rapportée au poids total de la composition thermoplastique.

**5.** La composition thermoplastique de l'une des revendications 1-4 comprenant en outre un composant de copolymère de polysiloxane présent dans une quantité allant de plus de 0% en poids à 5% en poids, rapportée au poids total de la composition thermoplastique.

**6.** La composition thermoplastique de l'une des revendications 1-5, dans laquelle la charge minérale est du talc ou de l'argile, ou les deux.

**7.** La composition thermoplastique de la revendication 6, dans laquelle la charge minérale a une taille de particule moyenne allant de 0,05 $\mu$m à 3 $\mu$m.

**8.** La composition thermoplastique de l'une des revendications 1-7, dans laquelle l'agent ignifugeant contient du phosphore.

**9.** La composition thermoplastique de l'une des revendications 1-8, dans laquelle la composition thermoplastique a une résistance au choc Charpy d'au moins 7 $KJ/m^2$ en utilisant la norme d'essai ISO 179.

**10.** La composition thermoplastique de l'une des revendications 1-9, dans laquelle la composition thermoplastique a une température de fléchissement sous charge d'au moins 76° C en utilisant la norme d'essai ISO 75, 18,6 kg.

**11.** La composition thermoplastique de l'une des revendications 1-10, dans laquelle la composition thermoplastique a une longueur d'écoulement en spirale d'au moins 500 à 2 mm d'épaisseur.

**12.** Procédé de formation d'une composition thermoplastique de l'une des revendications 1-11, consistant à mélanger :

a) de 50% en poids à 70% en poids du composant de polycarbonate ;
b) de 5% en poids à 20% en poids du composant copolymère d'acrylonitrile-butadiène-styrène de greffon à haute teneur en caoutchouc ou d'un composant de (méth) acrylate-butadiène-styrène de méthyle ;
c) de 5% en poids à 20% en poids du copolymère de styrène-acrylonitrile ;
d) de 5% en poids à 20% en poids du composant d'agent ignifugeant, où le composant d'agent ignifugeant est un composant d'agent ignifugeant contenant du phosphore ;
e) de 0,5% en poids à 5% en poids de la charge minérale,

dans lequel toutes les valeurs de pourcentage en poids sont rapportées au poids total de la composition ; et comprenant en outre le colorant dans une quantité allant de 0,01% en poids à 10% en poids du poids total de a) à e), dans lequel la moyenne en poids du poids moléculaire est mesurée selon le procédé pertinent détaillé dans la description, et dans lequel la composition thermoplastique ne présente aucune strie nette.

**13.** Un article fabriqué selon le procédé de la revendication 12.

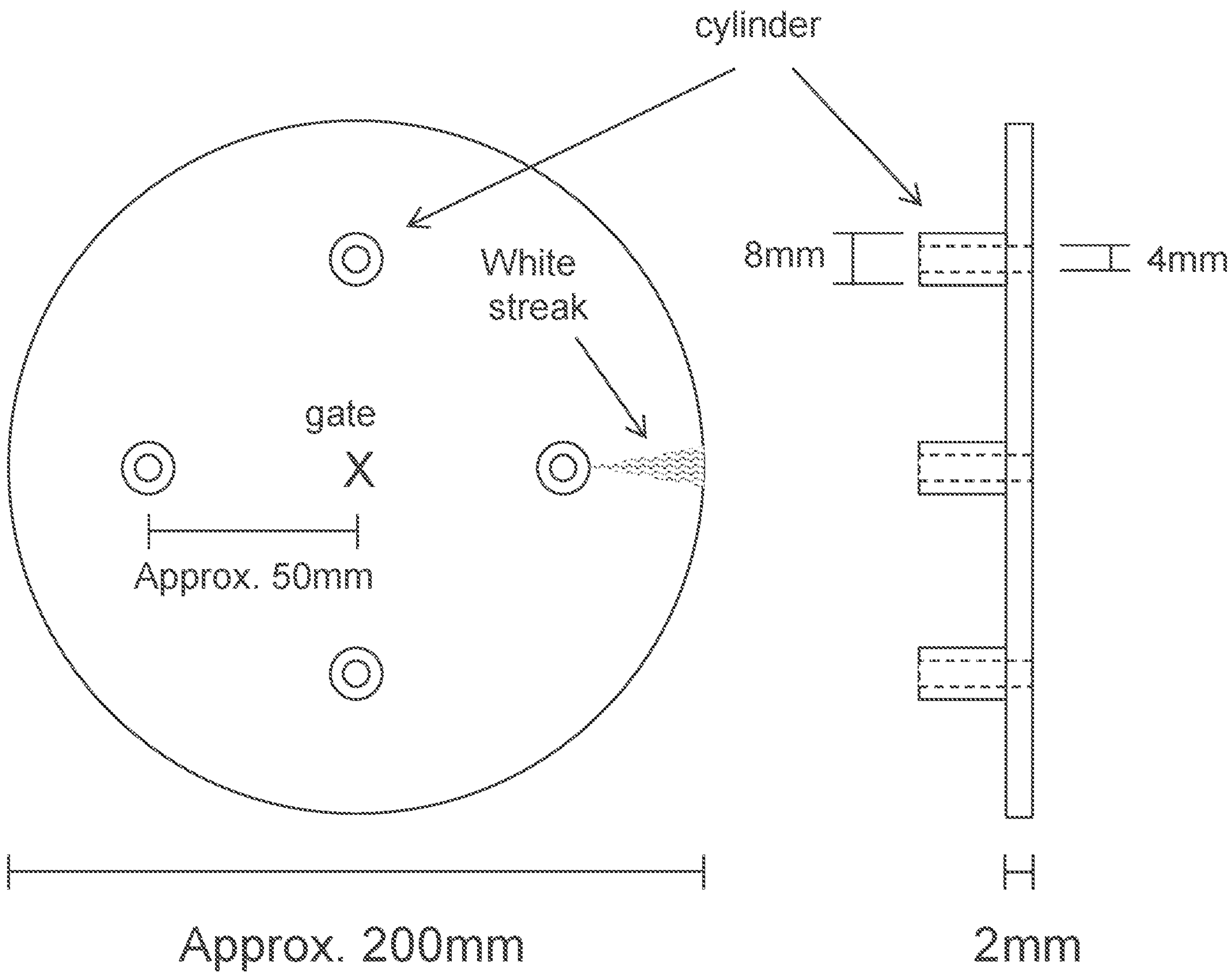
cylinder
8mm
4mm
White
streak
gate
X
Approx. 50mm
Approx. 200mm
2mm

FIG. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 0024828 A1
- US 7786246 B